# EUROPÄISCHE PATENTSCHRIFT

(11) **EP 1 658 891 B1**
(45) Veröffentlichungstag und Bekanntmachung des Hinweises auf die Patenterteilung: **05.12.2007**
(21) Anmeldenummer: 05021919.5
(22) Anmeldetag: 07.10.2005
(51) Int. Cl.: B01J 8/18

(54) **Verfahren zur Regulierung der Feststoffumlaufmenge eines zirkulierenden Wirbelschichtreaktorsystems**
Process regulating the amount of particles circulating in a cyclone reactor system
Procédé pour régler le taux des particules circulant dans un appareil comprenant un cyclone et un réacteur

(30) Priorität: 22.10.2004 DE 102004051477
(43) Veröffentlichungstag der Anmeldung: 24.05.2006
(73) Patentinhaber: Alstom Technology Ltd, 5401 Baden (CH)
(72) Erfinder: Muschelknautz, Ulrich, Dr., 70178 Stuttgart (DE); Röper, Bernhard, Dipl.-Ing., 50126 Bergheim (DE)

(56) Entgegenhaltungen:
- WO-A-98/53908
- FR-A- 2 290 244
- US-A- 3 199 270
- US-A- 5 426 868
- US-A- 5 634 516

## Beschreibung

Die Erfindung bezieht sich auf ein Verfahren zur Regulierung der Feststoffumlaufmenge eines zirkulierenden Wirbelschichtreaktorsystems.

Wirbelschichtreaktorsysteme sind bekannt für unterschiedlichste Anwendungen, beispielsweise in der chemischen Industrie oder in der Energie- bzw. Kraftwerkstechnik. Bei letzterer Anwendung werden im Wirbelschichtbett des Wirbelschichtreaktors fossile Brennstoffe wie Kohle oder andere brennbare Stoffe, beispielsweise Abfall bzw. Brennstoff aus Abfall oder Biomasse, verbrannt oder vergast. Zur Abtrennung und Rückführung des größten Teiles der im Abgas enthaltenen Feststoffpartikel (Asche und Inertmaterial) in den Wirbelschichtreaktor bzw. in die Brennkammer weist das Wirbelschichtreaktorsystem einen oder mehrere, in der Regel seitlich an die Brennkammer angehängte Zyklone auf. Die abgeschiedenen Feststoffpartikel werden in die Brennkammer zurückgeführt. Das Reingas des oder der Zyklone wird in einen Gaszug mit Nachschaltheizflächen geleitet, in dem die im Abgas enthaltene Wärme an ein Arbeitsmedium (Wasser/Dampf) zur Energieerzeugung abgegeben wird. (Siehe Druckschrift "Kraftwerkstechnik", Springer-Verlag, 2. Auflage 1994, Kapitel 4.3.2.3.3-Zirkulierende Wirbelschichtfeuerungen (Seite 151 bis 155), Prof.Dr.-Ing. Karl Strauß).

Für einen optimalen Betrieb von Feuerungen mit zirkulierender Wirbelschicht wird in der Regel ein möglichst hoher Abscheidegrad und eine niedrige Trennkorngröße der Zyklone angestrebt. Je höher der Abscheidegrad und je kleiner die Trennkorngröße ist, desto größer ist der umlaufende Feststoffmengenstrom und desto feiner ist dessen Körnung. Durch geeignete Auslegungen erreicht man heute mit modernen Zyklonen ein Umlaufmaterial mit einem mittleren Korndurchmesser d₅₀ (50 Massenprozent der umlaufenden Feststoffpartikel sind größer als d₅₀) von 100 *µ*m und darunter und einen Zyklonabscheidegrad von bis zu 99,9 %. Die Vorteile dieser modernen Zyklone für den Prozess der zirkulierenden Wirbelschichtfeuerung sind folgende:
- Guter Wärmeübergang in der Wirbelbrennkammer,
- Geringer Zusatzwirbelbettmaterial- bzw. Zusatzumlaufmaterialverbrauch,
- Gute Kalksteinausnutzung,
- Geringer Verschleiß der mit dem Feststoffumlaufmaterial in Berührung kommenden Heizflächen (z B. Membranrohrwände und Rohrbündel im Fließbettkühler),
- Verbesserter Ausbrand der Brennstoffpartikel.

Diese modernen optimierten Zyklone haben allerdings den Nachteil, dass bei Einsatz von Brennstoffen, deren Asche einen hohen Beitrag zur Feststoffumlaufmenge liefert, der umlaufende Feststoffmengenstrom so groß wird, dass es zu gravierenden Betriebsstörungen kommt. Dieses Problem stellt sich insbesondere dann, wenn Brennstoffe eingesetzt werden, deren Aschegehalte und/oder Ascheeigenschaften stark variieren, d.h. wenn die Brennstoffe unterschiedlich viel feinkörniges Umlaufmaterial (d.h. umlauffahiges Wirbelbettmaterial) bilden. Temporär - beim Einsatz von Brennstoff mit hohem Aschegehalt - befindet sich dann zuviel Asche und damit zuviel Feststoff im Umlauf. Die daraus resultierenden Betriebsstörungen sind beispielsweise
- Abfall der Wirbelschichtbrennkammer-Temperatur; daraus resultierend ein Unterschreiten der Soll-Temperatur des Arbeitsmediums,
- Überlastung des externen Umlaufaschesystems mit der Folge eines Verstopfens z.B der Fallrohre oder der Rückführleitungen,
- Überschüttung des Brennkammer-Düsenbodens durch zuviel in der Schwebe befindliches Wirbelbettmaterial mit der Folge eines Ausfalls der Anlage, z.B. durch Überlastung des Primärlüfters.

Generell ist es für den Betrieb von Anlagen mit zirkulierender Wirbelschicht vorteilhaft, sowohl die Menge als auch die Körnung des Wirbelbettmaterials beeinflussen zu können. Deswegen wird neben der Möglichkeit, Wirbelbettmaterial als sogenannte Bettasche vom Düsenboden der Brennkammer abzuziehen, d.h. die Menge des Feststoffs in der Brennkammer zu vermindern, in der Regel eine zweite Möglichkeit zur Beeinflussung der Körnung des Wirbelbettmaterials vorgesehen, z.B. der Betrieb von Aschesichtern mit Ascherückführeinrichtungen u.ä. oder auch die Zugabe von zusätzlichem Inertmaterial (nichtbrennbare Feststoffe wie beispielsweise Sand) mit spezifizierter Körnung. Diese Maßnahmen zielen jedoch auf eine Zufuhr von feinkörnigem Feststoff ab, d.h. sie führen zu einer Erhöhung der Feststoffumlaufmenge.

Bildet sich aus dem Brennstoff jedoch genügend viel feinkörniges Umlaufmaterial, so ist für einen stabilen Anlagenbetrieb ein gezielter Abzug dieser Anteile aus dem umlaufenden Feststoffmengenstrom erforderlich.

Mit den üblicherweise am Düsenboden der Brennkammer vorhandenen Entaschungssystemen lassen sich jedoch die feinkörnigen Feststoffpartikel kaum ausschleusen, da diese sich im Wirbelschichtreaktorsystem in nahezu ständiger Zirkulation befinden.

Aus Druckschrift DE 196 30 472 A1 ist ein Zyklon, insbesondere ein Zyklonabscheider oder Zyklonsichter bekannt geworden, der ein Ausschleusen von Partikeln aus dem im Zyklon abgetrennten Feststoffmengenstrom über die Reingasleitung des Zyklons vorsieht. Die Ausschleusung der Partikel erfolgt dabei mittels einer die Gas-Partikel-Strömung störenden Einrichtung, die im Einlaufbereich, im Einlaufgehäuse und/oder im zylindrischen Gehäuseteil angeordnet ist, wobei die störende Einrichtung unter anderem eine Blaseinrichtung sein kann. Diese Störeinrichtung bewirkt eine Auflockerung der sich am Innenumfang des Zyklonabscheiders bildenden Feststoffsträhnen, wodurch eine verbesserte Abtrennung des Feststoffs vom Gas insbesondere ohne die unerwünschten allerfeinsten Partikel möglich ist. Die übrige Abscheidung wird nicht beeinträchtigt. Dabei wird davon Gebrauch gemacht, dass nach Auflösung der Strähnen in ihre Einzelpartikel die feinen Partikel von der nach innen gerichteten Gasströmung des Zyklons abgesaugt und dem Reingas zugeführt werden, während die übrigen Partikel infolge der Fliehkräfte wieder an die Wandung geschleudert werden und dort eine neue Strähne bilden. Der Einsatz eines derartigen Zyklons in einem zirkulierenden Wirbelschichtreaktorsystem wird, wie oben beschrieben, zu einer Reduktion des Feinanteils im Umlaufmaterial führen und somit zu einer nachteiligen und unerwünschten Vergröberung von deren Körnung.

Durch Druckschrift EP 0 889 943 B1 ist ein Verfahren zum Betreiben eines Wirbelschichtreaktorsystems bekannt geworden, bei dem zum Zweck der Kühlflächenreinigung im Gaskühler ein Teil des im System umlaufenden Feststoffes abgezweigt und in den dem Partikelabscheider nachgeschalteten Gaskühler eingeleitet wird. Durch die abgezweigten und in den Gaskühler eingeleitete Feststoffpartikel erfolgt eine mechanische Reinigung und Entfernung der Ablagerungen an den Kühlflächen. Zum Zwecke der Feststoffabzweigung sind aufwendige Leitungen, die für Betriebstemperaturen von mindestens 800 °C ausgelegt sein müssen, sowie Regelorgane wie Schieber, Stellmotoren und dgl. erforderlich, die kostenseitig erheblich zu Buche schlagen.

Durch Druckschrift DE 695 04 524 T2 ist ein weiteres Verfahren zum Betreiben eines Wirbelschichtreaktorsystems bekannt geworden, wobei der Reaktor ein CFB-Reaktor (CFB bedeutet Circulating Fluidized Bed; Zirkulierende Wirbelschicht) ist, der einen Partikel- bzw. Zyklonabscheider zwischen Reaktor-Gasauslaß und Gaskühler aufweist, der normalerweise bei einer ersten Abscheideleistung arbeitet, die nicht zulässt, dass Feststoff in ausreichender Menge oder Größe in den Gaskühler gelangen, um dessen Reinigung zu bewirken. Zur Einleitung einer ausreichenden Menge von Feststoff in den Gaskühler wird ein Teil der umlaufenden Feststoffmenge ausgeschleust, indem die Abscheideleistung des Zyklonabscheiders reduziert wird. Dies geschieht, indem in die im Zyklonabscheider vorhandene Wirbelströmung eine Fluidströmung eingeführt wird, die die Wirbelströmung unterbricht und die Abscheideleistung gegenüber der normalen Abscheideleistung dadurch reduziert. Bei diesem Verfahren bzw. System zeigt sich nachteilig, dass zum einen die Wirbelströmung innerhalb des Zyklonabscheiders unterbrochen wird und zum anderen, dass eine sehr große Menge an Fluidströmung (ca. 10 % des im System umlaufenden Gases) notwendig wird, um die Wirbelströmung entsprechend beeinflussen zu können. Da als Fluidströmung in der Regel unter Druck stehende Luft oder Dampf eingesetzt wird, ist ferner das entsprechende Equipment erforderlich, wodurch der Gesamtwirkungsgrad der Anlage verringert wird. Schließlich erhöht der Einsatz dieser Fluidströmung die Kosten der Betriebsmittel nicht unerheblich.

Durch Druckschrift DE 41 36 935 A1 ist ein Zyklonabscheider bekannt geworden, bei dem die Abscheidewirkung den jeweiligen Betriebszuständen angepasst werden kann. Dies geschieht dadurch, dass an dem Kanal für den Gaseintritt und/oder an dem Tauchrohr für den Gasaustritt Einrichtungen bzw. Düsen vorgesehen sind, über welche die Strömungs- und Druckverhältnisse am Zyklonabscheider veränderbar sind bzw. über welche ein gasförmiges Medium zuführbar und über den Umfangsquerschnitt des jeweiligen Rohres verteilbar ist. Um die gewünschte Querschnittsverringerung mittels des gasförmigen Mediums an den jeweiligen Rohren zu erzielen, ist eine große Menge an gasförmigem Medium erforderlich, was die Betriebskosten in nachteiliger Weise in die Höhe treibt. Ferner ist ein kostenintensiver, großer apparativer Aufwand an Düsen, Stich- und Ringleitungen und dgl. mehr erforderlich, um das gasförmige Medium entsprechend einzuleiten.

Durch Druckschrift US 5,426,868 ist ein zirkulierender Wirbelschichtreaktor bekannt geworden. Zur Vermeidung von Blockagen in der zwischen Abscheidezyklon u. Wirbelschichtbrennkammer gelegenen Rückführleitung, verursacht durch die abgeschiedenen Feststoffe, sowie zur Absperrung von aus der Brennkammer austretenden Gasen wird Sekundärluft im Bereich des Abscheidezyklons sowie der Rückführleitung über gesonderte Leitungen eingetragen.

Durch Druckschrift US 3 199 270 A ist eine Vorrichtung zum Mischen und Abscheiden von Substanzen unterschiedlicher Massenträgheit bekannt geworden, wobei die Vorrichtung im wesentlichen aus einer zylinderförmigen Wirbelkammer besteht. In diese strömt von unten durch ein koaxiales Einströmrohr ein staubbeladener Rohgasstrom ein und verlässt diese als Reingas durch einen dem Rohgaseinlass gegenüberliegenden axialen Reingasauslass. Zur Anregung einer Drehströmung und zur Abscheidung des Staubes aus dem Gas innerhalb der Wirbelkammer ist eine Zweitluftdüse vorgesehen, die tangential ausgerichtet im Wirbelkammermantel angeordnet und dem aufsteigenden Rohgas schräg entgegengerichtet ist und einen wendelförmigen Düsenhauptstrahl bzw. eine Potentialwirbelströmung innerhalb der Wirbelkammer erzeugt. Ferner ist eine bzw. sind mehrere eine Geschwindigkeitsaufstockung des Hauptstrahls bewirkende zusätzliche Hilfsdüsen bzw. Zweitluftdüsen auf einer wendelförmigen Bahn, die annähernd dem Verlauf des Düsenhauptstrahls entspricht, in die Wirbelkammerwand eingebaut und es sind zusätzliche Düsen in Höhe eines oder vor einem am Rohgaseintritt angeordneten Strömungskörper sowie in die Rohgasleitung eingebaute Leitschaufeln zur Voranregung des Rohgasstromes vorgesehen. Durch die in Abständen von der ersten Zweitluftdüse angeordneten zusätzlichen Hilfsdüsen wird die innerhalb des Düsenhauptstrahls mit dem Düsenabstand abnehmende Geschwindigkeit des spezifisch leichteren Mediums, z.B. der Düsenluft oder kleinerer Staubpartikel, wieder auf die jeweilige Geschwindigkeit des spezifisch schwereren und vorauseilenden Mediums, z.B der Staubteilchen bzw. der gröberen Staubteile, gebracht. Der Düsenhauptstrahl tritt nach der letzten Geschwindigkeitserhöhung durch die letzte Hilfsdüse in eine Beruhigungszone ein, bevor er in den Sammel- bzw. Abtragraum strömt. In diesem bildet sich ein Staubkegel und der angesammelte Staub wird durch eine am Boden der Wirbelkammer befindliche Leitung abgeführt. Ferner ist oberhalb der Zweitlufteinblasung ein die Umfangskomponente und -breite der äußeren Potentialwirbelströmung vergrößernder ringförmiger Körper mit einem sich diffusorartig erweiternden hohlringförmigen Einschnitt und einer sich daran anschließenden Rückführung für den Düsenfehlstrahl in der Wirbelkammer angeordnet.

Sämtliche aufgezeigten Wirbelschichtreaktorsysteme bzw. Zyklonabscheider, bei denen ein Teil des umlaufenden Feststoffes aus dem Kreislauf ausgeschleust und dem Reingas zugeführt wird, haben den Nachteil, dass sie entweder aufwendig gebaut und daher sehr kostenintensiv in der Erstellung und im Betrieb sind oder dass nur ein bestimmter Teil des Feststoffkornspektrums abgetrennt bzw. ausgeschleust wird und damit eine unerwünschte Anreicherung eines anderen Kornspektrums im System erfolgt.

Aufgabe der vorliegenden Erfindung ist es, ein Verfahren zur Regulierung der Feststoffumlaufmenge eines zirkulierenden Wirbelschichtreaktorsystems vorzuschlagen, bei dem die vorgenannten Nachteile weitestgehend vermieden werden. Insbesondere ist es die Aufgabe der vorliegenden Erfindung, eine möglichst einfache technische Lösung zu finden, um zirkulierenden Feststoff gezielt, d.h. im Bedarfsfall und mengenmäßig steuerbar, aus dem Wirbelschichtprozess auszuschleusen. Wenn kein Bedarf für das Ausschleusen von Feststoff vorliegt, soll die weitere Aufgabe der vorliegenden Erfindung sein, dass die Maßnahme keine Störung des Wirbelschichtsystems darstellt, d.h. der Wirbelschichtreaktor soll sein ursprüngliches Betriebsverhalten haben, wenn die erfindungsgemäße Maßnahme bzw. Einrichtung außer Betrieb gesetzt wird.

Die vorstehend genannte Aufgabe wird hinsichtlich des Verfahrens durch die kennzeichnenden Merkmale des Patentanspruches 1 gelöst.

Vorteilhafte Ausgestaltungen der Erfindung sind den Unteransprüchen zu entnehmen.

Durch die erfindungsgemäße Lösung wird ein Verfahren Regulierung der Feststoffumlaufmenge eines zirkulierenden Wirbelschichtreaktorsystems geschaffen, das bzw. die die nachfolgenden Vorteile aufweist:
- Es sind keine aufwändigen und technisch anfälligen zusätzlichen Feststoffabzugseinrichtungen für den umlaufenden Feststoff erforderlich.
- Die fühlbare Wärme des ausgeschleusten Feststoffs wird genutzt.
- Der Verbrauch an Einblasemedium kann sehr gering gehalten werden und liegt in der Größenordnung von 1 % der Abgasmenge bzw. der erzeugten Dampfmenge.
- Die Zugabe des Blasmediums erfolgt nur bei Bedarf und kann vom Betriebspersonal einfach in und außer Betrieb genommen werden.
- Nach Ausschalten der Maßnahme befindet sich der Zyklonabscheider wieder im ursprünglichen Zustand bzw. Betriebszustand, d.h. die Maßnahme der Teilmengenentnahme von umlaufendem Feststoff stellt keine dauerhafte Modifikation des Zyklonbetriebsverhaltens dar.
- Die erfindungsgemäße Maßnahme ist für manuellen und automatisierten Betrieb geeignet.

Eine vorteilhafte Ausgestaltung der Erfindung sieht vor, dass der Düsen-Freistrahl beim Austritt aus der Düse mindestens Schallgeschwindigkeit aufweist. Damit wird die Effektivität der Feststoff-Teilmengenabtrennung optimiert.

Vorteilhaft ist es, für das mittels Freistrahl aus einer Düse in den Zyklonabscheider einströmende gasförmige Medium entweder Luft, Dampf oder das Abgas des Wirbelschichtreaktors oder eine Kombination daraus zu verwenden. Sämtliche dieser Medien sind entweder aus der Umgebung oder aus dem Wirbelschichtreaktorsystem selbst entnehmbar und somit leicht verfügbar. Bei der Verwendung von Dampf kann dieser entweder nach der Niederdruckturbine als Niederdruckdampf oder vom Versorgungssystem der Rußbläser, die zur Reinigung der Nachschaltheizflächen vorgesehen sind, entnommen werden.

Um die Wirkung des aus der Düse austretenden Düsen-Freistrahls optimal zu nutzen, muss die Lage der Düse in einem bestimmten Bereich der Wand des Zyklonabscheiders angeordnet sein. Dieser Bereich liegt in vorteilhafter Weise in einem Winkelbereich γ zwischen 30 und 180°, ausgehend von einer Ebene E, die durch die Zyklonmitte geht und senkrecht zur tangentialen Einströmrichtung des Feststoff-/Gasstromes in den Zyklonabscheider steht und wobei sich der Winkelbereich γ in Strömungsrichtung des Feststoff-/Gasstromes gesehen ab der Ebene E bzw. stromabwärts der Ebene E erstreckt.

In weiterer vorteilhafter Ausbildung der Erfindung tritt der Düsen-Freistrahl unter einem beidseitigen Winkel α₁, α₂ von 0 bis 50° gegenüber der von der Düse aus gesehen auf die Zyklonmitte gerichteten Radialen R in den Zyklonabscheider aus, wobei sich die Winkel α₁, α₂ auf der durch die Düse bzw. Düsenöffnung gehende Zyklonabscheider-Querschnittsebene erstrecken. Diese Maßnahme hat eine Verbesserung der Düsen-Strahlwirkung zur Folge, wobei eine weitere Optimierung dadurch erzielt werden kann, dass der Düsen-Freistrahl gegen die innerhalb des Zyklonabscheiders vorherrschende Umfangsströmungsrichtung des der Rückführleitung zugeführten Feststoffmengenstromes gerichtet wird.

Optimiert werden kann die Wirkungsweise des Strahlimpulses des Düsen-Freistrahls ferner dadurch, dass der Düsen-Freistrahl eine axiale Komponente in Richtung der Längsachse des Zyklonabscheiders aufweist, wobei die axiale Komponente des Düsen-Freistrahls einen ersten Winkel β₁ von 0 bis 80° oder einen zweiten Winkel β₂ von 0 bis 30° gegenüber der Zyklonlängsachsennormalen aufweist, wobei die axiale Komponente von β₁ in Richtung der Gas-Abströmöffnung und die von β₂ entgegen dieser Richtung weist. In zweckmäßiger Ausbildung weist dabei der Düsen-Freistrahl eine axiale Komponente unter einem Winkel β₁ von 10° bis 50° gegenüber der Zyklonlängsachsennormalen auf und in weiterer vorteilhafter Ausbildung weist der Düsen-Freistrahl in Richtung der Gas-Abströmöffnung hin.

Eine vorteilhafte Ausbildung sieht vor, dass bei Verwendung von zwei oder mehreren Düsen in entweder einem oder mehreren Zyklonabscheider(n) die Regulierung der in die Gas-Abströmöffnung ausgeleiteten Teilmenge des der Rückführleitung zugeführten Feststoffmengenstromes durch Zu- oder Abschaltung von einer oder mehreren Düsen erfolgt. Durch diese Maßnahme kann auf sehr einfache Weise die Feststoffumlaufmenge eines zirkulierenden Wirbelschichtreaktorsystems reguliert werden. Eine weitere Möglichkeit der Regulierbarkeit der Feststoffumlaufmenge ergibt sich, indem man vorteilhaft die Düsen mit unterschiedlich großen Durchmesser ausbildet und damit Düsen mit unterschiedlich großen Strahlmedium-Durchflußmengen generiert, die wiederum unterschiedlich große Teilmengen des der Rückführleitung zugeführten Feststoffmengenstromes in die Gas-Abströmöffnung ableiten. Eine weitere vorteilhafte Ausgestaltung sieht vor, dass die Ausleitung einer Teilmenge des der Rückführleitung zugeführten Feststoffmengenstromes mittels Strahlimpuls temporär erfolgt, d.h. bei Bedarf wird die jeweilige Düse betrieben, ansonsten nicht.

Die Ausleitung einer Teilmenge des der Rückführleitung zugeführten Feststoffmengenstromes wird zweckmäßigerweise durch manuelle oder automatisierte Betriebsweise der Düse und deren Versorgungssystem für gasförmiges Medium vorgenommen. Eine manuelle Betriebsweise erfordert zwar die Bedienung vor Ort, ist aber geräteseitig sehr kostengünstig. Die automatisierte Betriebsweise wiederum erfordert zwar geräteseitig mehr Aufwand, hat jedoch in der einfachen Bedienung ihre Vorteile. Vorteilhaft ist es dabei, den Betrieb der Düse bei automatisierter Betriebsweise in Abhängigkeit von Betriebs-Parametern des Wirbelschichtreaktors und/oder den Betriebs-Parametern der Abzugseinrichtungen für den Feststoff des Wirbelschichtreaktorsystems zu regeln. Durch diese Maßnahme ist gewährleistet, dass der Betrieb des Reaktorsystems in geregelten Bahnen verläuft und nur die Menge an Feststoffen umläuft, die im Reaktorsystem benötigt werden. Dabei hat sich als vorteilhaft gezeigt, dass die abgeführte Teilmenge 0,01 bis 10 % des der Rückführleitung zugeführten Feststoffmengenstromes beträgt.

In vorteilhafter Ausgestaltung der Erfindung wird bzw. ist der Wirbelschichtreaktor als Brennkammer ausgebildet und wird zur Verbrennung von brennbarem Material wie fossile und/oder biogene Brennstoffe und/oder Abfall bzw. Brennstoffe aus Abfall verwendet. Durch diese Maßnahme wird es ermöglicht, das erfindungsgemäße Wirbelschichtreaktorsystem in Dampfkraftanlagen zur Erzeugung von Strom einzusetzen.

Nachstehend sind Ausführungsbeispiele der Erfindung an Hand der Zeichnung und der Beschreibung näher erläutert.

Es zeigt:
- Fig. 1: ein schematisch dargestelltes zirkulierendes Wirbelschichtreaktorsystem,
- Fig. 2: einen schematischen Längsschnitt durch den Zyklonabscheider des zirkulierenden Wirbelschichtreaktorsystems gemäß Schnitt B - B der Figur 3,
- Fig. 3: einen schematischen Querschnitt durch den Zyklonabscheider des zirkulierenden Wirbelschichtreaktorsystems gemäß Schnitt A - A der Figur 2.

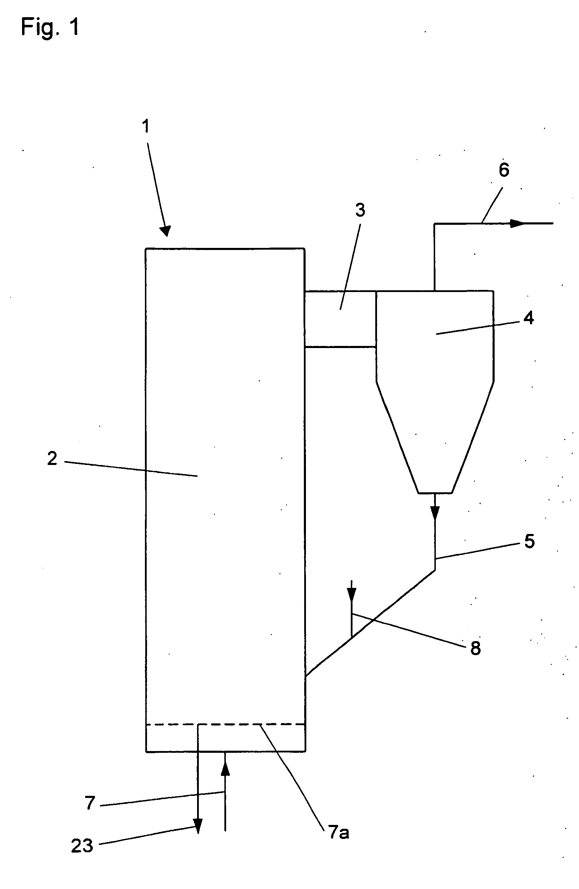

Figur 1 zeigt schematisch dargestellt ein zirkulierendes Wirbelschichtreaktorsystem 1, das einen Wirbelschichtreaktor 2 aufweist. Beim hier aufgezeigten Ausführungsbeispiel wird das Wirbelschichtreaktorsystem 1 innerhalb einer nicht dargestellten Energiegewinnungsanlage eingesetzt und zur Verbrennung eines festen Brennstoffes benutzt, der somit im Reaktor bzw. der Brennkammer 2 verfeuert wird. Der feste Brennstoff, insbesondere fossile Brennstoff, z.B. Kohle, aber auch Abfall bzw. Brennstoffe aus Abfall, Biomasse oder dgl. und ggf. Additive, wird über eine Zuführungsleitung 8 und einer Rückführungsleitung 5 der Brennkammer 2 aufgegeben. Über eine Zuführungsleitung 7 und einen Verteilerboden 7a wird der Brennkammer 2 ein Fluidisierungsmedium, das gleichzeitig ein Oxidationsmittel, in der Regel Luft, ist, zugegeben, um zum einen die Verbrennung des Brennstoffes zu ermöglichen und zum anderen die Wirbelschicht in der Brennkammer 2 aufrecht zu erhalten. Das bei der Verbrennung entstehende Abgas sowie ein Teil der in der Brennkammer 2 befindlichen Feststoffe, die aus unterschiedlich großen Aschepartikel, Inertmaterial (nichtbrennbaren Bestandteilen) und ggf. unverbrannten Partikel besteht, wird über eine Gas-/Feststoffleitung 3 als Feststoff-/Gasstrom 9 einem oder mehreren Zyklonabscheider(n) 4 zugeführt. Bei mehreren Zyklonabscheidern 4 sind diese in der Regel hinsichtlich der Durchleitung des Feststoff-/Gasstromes 9 parallel zueinander geschaltet.

Im Zyklonabscheider 4, der einen Fliehkraftabscheider darstellt, findet eine weitgehende Abtrennung der im Feststoff-/Gasstrom 9 enthaltenen Feststoffe statt, wobei der abgetrennte Feststoffmengenstrom 11 über eine den Zyklonabscheider 4 mit der Wirbelschichtbrennkammer 2 verbindenden Rückführleitung 5 der Brennkammer 2 zugeführt wird. Es findet somit eine (externe) Zirkulierung eines Teils des Feststoffes über den Zyklonabscheider 4 innerhalb des Wirbelschichtreaktorsystems 1 statt. Das Abgas bzw. der aus dem Zyklonabscheider 4 austretende Gasstrom 10 entweicht über eine Gasaustrittsleitung 6 und wird in der Regel einem mit Nachschaltheizflächen ausgebildeten Gaszug (nicht dargestellt) zugeführt. In diesem gibt das heiße Abgas seine Wärme an ein in den Nachschaltheizflächen zirkulierendes Arbeitsmedium, in der Regel Wasser/Dampf, zur Energiegewinnung ab. Insbesondere gröbere Feststoffpartikel, die nicht an der Feststoffzirkulierung bzw. dem Feststoffumlauf innerhalb des Wirbelschichtreaktorsystems 1 partizipieren, können über eine am Fluidisierungsmedium-Verteilerboden 7a angeordnete Feststoff-Abzugseinrichtung 23 aus der Wirbelschichtbrennkammer 2 ausgetragen werden.

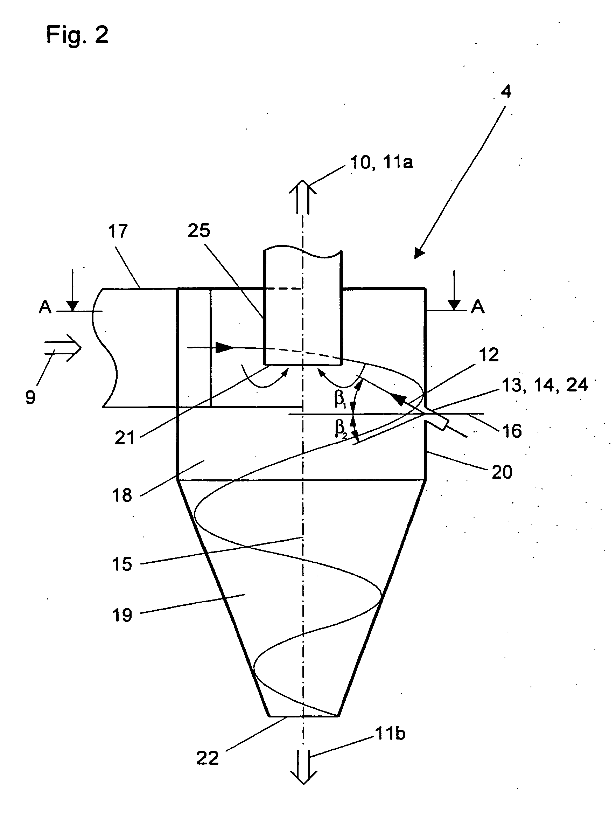

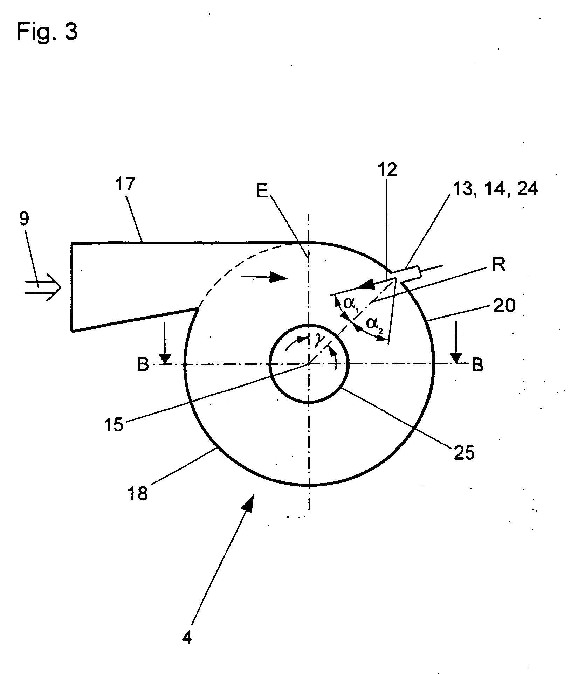

Figur 2 und 3 zeigt den Zyklonabscheider 4 schematisch im Längsschnitt sowie im Querschnitt auf, wobei hier beispielhaft ein vertikaler Zyklonabscheider 4 eingesetzt wird, der sich um eine Zyklonlängsachse 15 erstreckt. Der Abscheider 4 weist am oberen Ende einen Zykloneinlauf 17 auf, durch den der Feststoff-/Gasstrom 9 tangential in den Abscheider 4 eingetragen wird. Der dargestellte Zyklonabscheider 4 hat beispielhaft einen schlitzförmigen Einlauf 17. Das erfindungsgemäße Verfahren kann auch auf einen Zyklonabscheider mit spiralförmigem Einlauf (nicht dargestellt) angewendet werden, bei dem der Feststoff/Gasstrom 9 ebenfalls tangential in den Abscheider 4 eintritt. Unterhalb des Einlaufs 17 schließt ein zylindrischer Teil 18 und anschließend ein konischer Teil 19 mit einer Austrittsöffnung 22 am unteren Ende des Zyklonabscheiders 4 an, wobei der Zyklonabscheider 4 durch Wände 20 gebildet wird, bestehend aus der Wand des zylindrischen Teils 18, den Wänden des Zykloneinlaufs 17, der Wand des konischen Teils 19 sowie der Zyklondecke. Die Zyklondecke ist mit einer Gas-Abströmöffnung 21 ausgebildet. Die Abströmöffnung 21 kann dabei entweder wie in Figur 2 veranschaulicht die untere Öffnung eines in der Decke des Abscheiders 4 angeordneten Tauchrohres 25 sein oder eine Öffnung direkt in der Decke des Abscheiders 4 sein. Wie insbesondere in Figur 2 schematisch dargestellt und zu ersehen, wird der in den Zyklonabscheider 4 eintretende Feststoff-/Gasstrom 9 durch die im Abscheider 4 auftretenden Fliehkräfte weitgehend getrennt, wobei der abgetrennte Feststoffmengenstrom 11 durch die Austrittsöffnung 22 der Rückführleitung 5 und der Gasstrom 10 als Reingas durch die Abströmöffnung 21 der Gasaustrittsleitung 6 zugeführt wird. Der abgetrennte Feststoff 11 bewegt sich dabei im zylindrischen 18 und konischen 19 Teil des Zyklonabscheiders 4 spiralförmig, eine lokal unterschiedlich dicke Schicht bildend, längs der Wand 20 des Abscheiders 4 zur Austrittsöffnung 22 hin.

Um die Feststoffumlaufmenge eines zirkulierenden Wirbelschichtreaktorsystems 1 regulierbar zu machen, wird erfindungsgemäß von der Wand 20 des Zyklonabscheiders 4 aus mittels des Strahlimpulses wenigstens eines von einer Düse 13 gebildeten gasförmigen Düsen-Freistrahls 12 eine Teilmenge 11a des der Rückführleitung 5 zugeführten und in Form einer Schicht an der Wand 20 vorbeiströmenden Feststoffmengenstromes 11 gezielt in die Gas-Abströmöffnung 21 geleitet und die verbleibende Restmenge 11 b der Rückführleitung 5 zugeführt. Im Freistrahl 12 erfahren die über die Düsenöffnung 24 der Düse 13 strömenden Feststoffpartikel eine starke Beschleunigung von der Wand 20 weg ins Zykloninnere. Aufgrund der hohen Umfangsgeschwindigkeit der längs der Wand 20 rotierenden Feststoffschicht bzw. Feststoffteppichs schneidet der Düsen-Freistrahl 12 beispielsweise in einer Zeiteinheit von einer Sekunde einen Feststoffstreifen von mehreren Metern Länge aus dem rotierenden Feststoffteppich aus und bläst diesen ins Zykloninnere. Auf diese Weise wird eine beträchtliche Feststoffmenge vom Düsen-Freistrahl 12 getroffen und nach innen gelenkt. Nach Verlassen des Freistrahlgebietes bewegen sich die Partikel unter dem Einfluss ihrer Trägheit und dem des Zyklonströmungsfeldes auf gekrümmten Bahnen bis in den Bereich unmittelbar unter der Gas-Abströmöffnung 21, wo sie mit der Reingasströmung 10 abgesaugt werden.

Erfindungsgemäß wird das Kornspektrum des im zirkulierenden Wirbelschichtreaktorsystem 1 umlaufenden Feststoffmengenstromes nach der Aufteilung in die beiden Feststoffteilmengenströme 11 a, 11 b im wesentlichen aufrecht erhalten. Mit anderen Worten ausgedrückt heißt das, dass durch den gasförmigen Düsen-Freistrahl 12 eine Teilmenge 11 a jedweder Korngrößenklasse des der Rückführleitung zugeführten Feststoffmengenstromes 11 "herausgeblasen" und in die Gas-Abströmöffnung 21 geleitet wird und somit erfindungsgemäß im wesentlichen keine Klassierung bzw. Sichtung des umlaufenden Feststoffes erfolgt, sondern der Massenstrom des umlaufenden Feststoffes beeinflusst wird. Durch das Herausblasen bzw. "Herausschießen" einer Teilmenge 11 a aus dem Feststoffmengenstrom 11 in die Gas-Abströmöffnung 21 wird eine unerwünschte und nachteilige Veränderung des Kornspektrums des umlaufenden Feststoffes vermieden, was, wie oben schon angedeutet, einer Klassierung bzw. Sichtung des Umlaufgutes gleichkäme.

Die Düse 13 ist dabei dergestalt an der Wand 20 des Zyklonabscheiders 4 angeordnet, dass an der Innenseite des Abscheiders 4 bzw. dessen Wand 20 keine Teile der Düse 13 vorstehen bzw. hineinragen und somit keine Angriffspunkte für die im Zyklonabscheider 4 strömenden Feststoffe 11 bilden. Der aus der Düse 13 austretende Freistrahl 12 weist beim Austritt aus der Düsenöffnung 24 mindestens Schallgeschwindigkeit auf, wobei das zum Einsatz kommende gasförmige Medium entweder aus Luft, Dampf oder Abgas des Wirbelschichtreaktors oder eine Kombination daraus besteht. Bei Einsatz von Dampf wird entweder Niederdruckdampf aus dem Wasser-/Dampf-Kreislauf des Wirbelschichtreaktorsystems 1 oder aus einem Versorgungssystem für die Rußbläser, die im Reaktorsystem 1 eingesetzt werden, entnommen. Zur Erreichung von Überschallgeschwindigkeit kann eine Düsengeometrie in Form einer Lavaldüse eingesetzt werden. Der Vordruck des Blas- bzw. Strahlmediums wird entsprechend der zu erzielenden Austrittsgeschwindigkeit aus der Düse gewählt.

Die Lage der Düse 13 an der Wand 20 des Zyklonabscheiders 4 wird in Figur 2 und 3 veranschaulicht. Figur 3 zeigt den Querschnitt des Zyklonabscheiders 4 mit seiner Mitte bzw. seiner Längsachse 15 und den tangentialen Eintritt des Feststoff-/Gasstromes 9. Zur Bestimmung der Lage der Düse 13 wird eine virtuelle Ebene E herangezogen, die senkrecht zur tangentialen Einströmrichtung des Feststoff-/Gasstromes 9 in den Zyklonabscheider 4 steht und durch die Zyklonmitte geht. Ausgehend von der Ebene E und in Strömungsrichtung des Feststoff-/Gasstromes 9 gesehen ist die Düse 13 innerhalb eines Winkelbereiches γ von 30° bis 180° und stromabwärts der Ebene E an der Wand 20 des Zyklonabscheiders 4 angeordnet.

In Figur 2 ist veranschaulicht, dass der Düsen-Freistrahl 12 eine axiale Komponente in Richtung der Längsachse 15 des Zyklonabscheiders 4 aufweist, wobei die axiale Komponente des Düsen-Freistrahls 12 einen ersten Winkel β₁ von 0 bis 80° oder einen zweiten Winkel β₂ von 0 bis 30° gegenüber der Zyklonlängsachsennormalen 16 aufweist und wobei der Freistrahl 12 unter dem ersten Winkel β₁ in Richtung der Gas-Abströmöffnung 21 und unter dem zweiten Winkel β₂ von der Gas-Abströmöffnung 21 wegweist. Vorteilhaft weist der Freistrahl 12 in Richtung der Gas-Abströmöffnung 21 und weist die axiale Komponente einen ersten Winkel β₁ von 10 bis 50° gegenüber der Zyklonlängsachsennormalen 16 auf. Neben der axialen Komponente des Düsen-Freistrahls 12 weist dieser bezogen auf eine Horizontalebene auch noch eine Komponente auf, die, wie Figur 3 veranschaulicht, um den Winkel α₁, α₂ von der gedachten Radialen R abweicht, wobei die auf die Zyklonmitte ausgerichtete Radiale R durch die den Freistrahl 12 freigebende Düsenöffnung 24 der Düse 13 geht. Vorteilhaft ist der Freistrahl 12 unter dem Winkel α₁ in Richtung des Zykloneinlaufes 17 bzw. entgegen die Strömungsrichtung des in den Zyklonabscheider 4 eintretenden Feststoff-/Gasstromes 9 gerichtet. Alternativ kann der Freistrahl 12 auch unter dem Winkel α₂ in Strömungsrichtung des in den Zyklonabscheider 4 eintretenden Feststoff-/Gasstromes 9 gerichtet werden. Vorteilhaft tritt der Freistrahl 12 unter einem Winkel α₁, α₂ von 0 bis 50° in den Abscheider 4 aus.

Eine nicht dargestellte Ausführung sieht zwei oder mehrere Düsen 13 in einem oder mehreren Zyklonabscheidern 4 vor. Die Regulierung der ausgeleiteten Teilmenge 11a des der Rückführleitung 5 zugeführten Feststoffmengenstromes 11 kann in diesem Fall durch Zu- oder Abschaltung von einer oder mehreren Düsen 13 erfolgen. Die Anordnung von zwei oder mehreren Düsen 13 und deren Ausrichtung des Freistrahles, 12 in einem oder mehreren Zyklonabscheider(n) 4 erfolgt dabei unter denselben Merkmalen wie vorgenannt für eine Düse 13, d.h. innerhalb der vorgenannten Winkelbereiche.

Eine stufenweise regulierbare Feststoffausschleusung 11 a kann beispielsweise dadurch realisiert werden, indem Düsen 13 mit unterschiedlichen Düsendurchmessern und damit unterschiedlichen Blasmedium-Durchflussmengen in die einzelnen Zyklone 4 eingesetzt werden. Beispielsweise können bei einer Anlage mit zwei Zyklonen 4 in den einen Zyklon 4 eine Düse 13 eingesetzt werden, die 1/3 der maximal benötigten Feststoffmenge 11 a ausschleust, und in den anderen Zyklon 4 eine weitere Düse 13, die 2/3 der Maximalmenge 11 a ausschleust. Durch Betreiben einer der beiden Düsen 13 oder beider Düsen 13 zusammen kann auf diese Weise 33%, 67% oder 100% der maximal benötigten Feststoffmenge 11 a ausgeschleust werden.

Alternativ dazu kann die Ausleitung einer Teilmenge 11a des der Rückführleitung 5 zugeführten Feststoffmengenstromes 11 mittels Strahlimpuls temporär erfolgen, d.h. dass die Ausleitung der Teilmenge 11 a gemäß den temporären betrieblichen Anforderungen erfolgt und dementsprechend der Düsen-Freistrahl 12 aus der Düse 13 in den Zyklon 4 eingetragen wird oder nicht.

Die Düse 13 sowie deren Versorgungssystem 14 (Versorgungsleitungen, Absperrarmaturen, Mengeneinstell- und Messvorrichtungen, Druckmesseinrichtungen usw.) für gasförmiges Medium und somit die Einleitung des Freistrahls 12 in den Zyklonabscheider 4 kann manuell oder automatisch betrieben werden. Bei automatisierter Betriebsweise kann der Betrieb der Düse 13 in Abhängigkeit von Betriebs-Parametern des Wirbelschichtreaktors 2 und/oder den Betriebs-Parametern der Abzugseinrichtungen 23 für den Feststoff des Wirbelschichtreaktorsystems 1 geregelt werden. Die durch die Gas-Abströmöffnung 21 abgeführte Teilmenge 11a beträgt vorteilhaft 0,01 bis 10 % des der Rückführleitung 5 zugeführten Feststoffmengenstromes 11.

Die Düse 13 kann zusätzlich mit einer nicht dargestellten Sperr- oder Spülgasversorgung und einer Stocheröffnung vorgesehen werden. Damit kann die Düse 13 von Ascheablagerungen freigehalten bzw. wieder freigemacht werden.

Das erfindungsgemäße Verfahren kann auch bei instationären Bedingungen, die eine Reduzierung der Ascheumlaufmenge bzw. Feststoffumlaufmenge erfordern, genutzt werden. Ein Beispiel hierfür wäre eine Lastabsenkung bei einem Störfall, oder wenn für einen Stillstand des Wirbelschichtreaktorsystems 1 die Feststoffumlaufmenge ausgeschleust werden soll.

Das erfindungsgemäße Verfahren ist ohne großen Aufwand auch bei bestehenden Wirbelschichtreaktorsystemen nachrüst- und anwendbar. Wegen der geringen Investitionskosten ist selbst ein vorbeugender Einbau der Vorrichtung zur Durchführung des erfindungsgemäßen Verfahrens lohnend.

Neben dem hier beispielhaft angeführten Wirbelschichtreaktorsystem zur Verbrennung von Brennstoff kann das Wirbelschichtreaktorsystem 1 beispielsweise auch bei Vergasungsanlagen, Rauchgasreinigungsanlagen, metallurgischen Prozessen, chemischen Anlagen oder anderen Prozessen angewandt werden.

### Bezugszeichenliste:

- 1: Wirbelschichtreaktorsystem
- 2: Wirbelschichtreaktor
- 3: Gas-/Feststoffleitung
- 4: Zyklonabscheider
- 5: Feststoff-Rückführleitung
- 6: Gasaustrittsleitung
- 7: Zuführungsleitung für Fluidisierungsmedium
- 7a: Verteilerboden für Fluidisierungsmedium
- 8: Zuführungsleitungen für feststoffhaltige Einsatzstoffe und ggf. Additive
- 9: Feststoff-/Gasstrom
- 10: Austretender Gasstrom
- 11: Abgetrennter Feststoffmengenstrom
- 11 a: Teilmenge des abgetrennten Feststoffmengenstromes
- 11 b: Restmenge des abgetrennten Feststoffmengenstromes
- 12: Düsen-Freistrahl
- 13: Düse
- 14: Versorgungssystem für gasförmiges Medium
- 15: Zyklonlangsachse
- 16: Zyklonlängsachsennormale
- 17: Zykloneinlauf
- 18: Zylindrischer Teil des Zyklons
- 19: Konischer Teil des Zyklons (Zyklontrichter)
- 20: Wand des Zyklonabscheiders
- 21: Gas-Abströmöffnung an der Zyklondecke
- 22: Feststoff-Austrittsöffnung
- 23: Abzugseinrichtungen für Feststoff
- 24: Düsenöffnung
- 25: Tauchrohr

## Patentansprüche

1. Verfahren zur Regulierung der Feststoffumlaufmenge eines zirkulierenden Wirbelschichtreaktorsystems,
wobei ein aus dem Wirbelschichtreaktor (2) des zirkulierenden Wirbelschichtreaktorsystems (1) austretender Feststoff-/Gasstrom (9) wenigstens einem Zyklonabscheider (4) zur weitgehenden Abtrennung der Feststoffe aus dem Gasstrom tangential zugeführt wird und der im Zyklonabscheider abgetrennte Feststoff über eine Rückführleitung (5) wieder in den Wirbelschichtreaktor (2) eingebracht wird,
wobei der aus dem Wirbelschichtreaktorsystem (1) abzuführende Gasstrom (10) durch eine an der Decke des Zyklonabscheiders (4) angeordnete Gas-Abströmöffnung (21) austritt und der abgetrennte Feststoffmengenstrom (11) der Rückführleitung (5) zugeführt wird,
**dadurch gekennzeichnet, dass**
von der Wand (20) des Zyklonabscheiders (4) aus mittels des Strahlimpulses wenigstens eines von einer Düse (13) gebildeten gasförmigen Düsen-Freistrahls (12) eine Teilmenge (11a) des der Rückführleitung (5) zugeführten Feststoffmengenstromes (11) in die Gas-Abströmöffnung (21) geleitet und die verbleibende Restmenge (11b) der Rückführleitung (5) zugeführt wird,
wobei der Düsen-Freistrahl (12) der Düse (3) aus einem Bereich der Wand (20) des Zyklonabscheiders (4) austritt, der den Winkelbereich (γ) zwischen 30 und 180° umfasst, ausgehend von der virtuellen Ebene (E), die durch die Zyklonmitte geht und senkrecht zur tangentialen Einströmrichtung des Feststoff-/Gasstromes (9) in den Zyklonabscheider (4) steht und wobei sich der Winkelbereich in Strömungsrichtung des Feststoff-/Gasstromes (9) gesehen stromabwärts der virtuellen Ebene (E) erstreckt.

2. Verfahren nach Anspruch 1, **dadurch gekennzeichnet, dass** der Düsen-Freistrahl (12) beim Austritt aus der Düse (13) mindestens Schallgeschwindigkeit aufweist.

3. Verfahren nach Anspruch 1 oder 2, **dadurch gekennzeichnet, dass** das mittels Düse (13) als Düsen-Freistrahl (12) einströmende gasförmige Medium entweder aus Luft, Dampf oder dem Abgas des Wirbelschichtreaktors (2) oder aus einer Kombination daraus besteht.

4. Verfahren nach Anspruch 3, **dadurch gekennzeichnet, dass** als Dampf Niederdruckdampf oder Dampf aus einem Versorgungssystem für Rußbläser verwendet wird.

5. Verfahren nach einem der Ansprüche 1 bis 4, **dadurch gekennzeichnet, dass** der Düsen-Freistrahl (12) unter einem beidseitigen Winkel (α₁, α₂) von 0 bis 50° gegenüber der von der Düse (13) aus gesehen auf die Zyklonmitte gerichteten Radialen (R) in den Zyklonabscheider (4) austritt, wobei sich die Winkel (α₁,α₂) auf der durch die Düse (13) gehende Zyklonabscheider-Querschnittsebene erstrecken.

6. Verfahren nach Anspruch 5, **dadurch gekennzeichnet, dass** der Düsen-Freistrahl (12) gegen die innerhalb des Zyklonabscheiders (4) vorherrschenden Umfangsströmungsrichtung des der Rückführleitung (5) zugeführten Feststoffmengenstromes (11) gerichtet wird.

7. Verfahren nach einem der Ansprüche 1 bis 6, **dadurch gekennzeichnet, dass** der Düsen-Freistrahl (12) eine axiale Komponente in Richtung der Längsachse (15) des Zyklonabscheiders (4) aufweist, wobei die axiale Komponente des Düsen-Freistrahls (12) einen ersten Winkel (β₁) von 0 bis 80° oder einen zweiten Winkel (β₂) von 0 bis 30° gegenüber der Zyklonlängsachsennormalen (16) aufweist und wobei die axiale Komponente des ersten Winkels (β₁) in Richtung der Gas-Abströmöffnung (21) und die des zweiten Winkels (β₂) entgegen dieser Richtung weist.

8. Verfahren nach Anspruch 7, **dadurch gekennzeichnet, dass** der Düsen-Freistrahl (12) in die Richtung der Gas-Abströmöffnung (21) weist.

9. Verfahren nach einem der vorgenannten Ansprüche, **dadurch gekennzeichnet, dass** die axiale Komponente des Düsen-Freistrahls (12) einen ersten Winkel (β₁) von 10 bis 50° gegenüber der Zyklonlängsachsennormalen (16) aufweist.

10. Verfahren nach einem der Ansprüche 1 bis 9, **dadurch gekennzeichnet, dass** bei vorhandenen zwei oder mehreren Düsen (13) in einem oder mehreren Zyklonabscheider (4) die Regulierung der ausgeleiteten Teilmenge (11a) des der Rückführleitung (5) zugeführten Feststoffmengenstromes (11) durch Zu- oder Abschaltung von einer oder mehreren Düsen (13) erfolgt.

11. Verfahren nach einem der Ansprüche 1 bis 10, **dadurch gekennzeichnet, dass** die mengenseitige Höhe der ausgeleiteten Teilmenge (11a) des der Rückführleitung (5) zugeführten Feststoffmengenstromes (11) mittels unterschiedlich großer Düsendurchmesser und deren unterschiedlich großer Strahlmedium-Durchflussmengen bewirkt wird.

12. Verfahren nach einem der Ansprüche 1 bis 11, **dadurch gekennzeichnet, dass** die Ausleitung einer Teilmenge (11a) des der Rückführleitung (5) zugeführten Feststoffmengenstromes (11) mittels Strahlimpuls temporär erfolgt.

13. Verfahren nach einem der Ansprüche 1 bis 12, **dadurch gekennzeichnet, dass** die Ausleitung einer Teilmenge (11a) des der Rückführleitung (5) zugeführten Feststoffmengenstromes (11) durch manuelle oder automatische Betriebsweise der Düse (13) und deren Versorgungssystem (14) für gasförmiges Medium vorgenommen wird.

14. Verfahren nach Anspruch 13, **dadurch gekennzeichnet, dass** bei automatisierter Betriebsweise der Betrieb der Düse (13) in Abhängigkeit von Betriebs-Parametern des Wirbelschichtreaktors (2) und/oder den Betriebs-Parametern der Abzugseinrichtungen (23) für den Feststoff des Wirbelschichtreaktorsystems (1) geregelt wird.

15. Verfahren nach einem der Ansprüche 1 bis 14, **dadurch gekennzeichnet, dass** die abgeführte Teilmenge (11a) 0,01 bis 10 % des der Rückführleitung (5) zugeführten Feststoffmengenstromes (11) beträgt.

16. Verfahren nach einem der Ansprüche 1 bis 15, **dadurch gekennzeichnet, dass** der Wirbelschichtreaktor (2) als Brennkammer ausgebildet ist und zur Verbrennung von brennbarem Material wie fossile und/oder biogene Brennstoffe und/oder Abfall bzw. Brennstoffe aus Abfall verwendet wird.

## Claims

1. Method for regulating the quantity of circulating solid in a circulating fluidized bed reactor system,
whereby a solid flow/gas flow 9 leaving the fluidized bed reactor 2 of the circulating fluidized bed reactor system 1 is fed tangentially into at least one cyclone separator 4 for extensive separation of the solid from the gas flow, and at least a portion of the solid that has been separated in the cyclone separator is reintroduced into the fluidized bed reactor 2 via a recirculation line 5,
whereby the gas flow 10 that is to be exhausted from the fluidized bed reactor system 1 leaves via a gas outflow opening 21 in the roof of the cyclone separator 4, and the separated solid flow quantity 11 is fed back to the recirculation line 5,
**characterized in that**
a partial quantity 11a of the solid flow quantity 11 that is fed into the recirculation line 5 is directed from the wall 20 of the cyclone separator 4 to the gas outflow opening 21 by means of a jet blast from at least one gaseous free jet 12 formed by a nozzle 13, and the remaining quantity 11b is fed to the recirculation line 5,
whereby the free jet 12 exits the nozzle 3 from a region of the wall 20 of the cyclone separator 4 at an angular range γ between 30° and 180° proceeding from the virtual plane E that passes through the middle of the cyclone and that stands perpendicular to the tangential inflow direction of the solid flow/gas flow 9 in the cyclone separator 4, and whereby the angular range extends in the direction of flow of the solid flow/gas flow 9, viewed downwards from the virtual plane E.

2. Method according to claim 1, **characterized in that** the free jet 12 exhibits at least the speed of sound upon leaving the nozzle 13.

3. Method according to claim 1 or 2, **characterized in that** the gaseous medium flowing in as a free jet 12 from the nozzle 13 is comprised of either air, steam, or the exhaust gas of the fluidized bed reactor 2, or of a combination thereof.

4. Method according to claim 3, **characterized in that** low-pressure steam or steam from a supply system for soot blowers is used as the steam.

5. Method according to one of claims 1 to 4, **characterized in that** the free jet 12 emerges at a bilateral angle α₁, α₂ of 0° to 50° in comparison to the radial R that is directed toward the middle of the cyclone in the cyclone separator as seen from the nozzle 13, whereby the angles α₁, α₂ extend to the cross-sectional plane of the cyclone separator 4 that passes through the nozzle 13.

6. Method according to claim 5, **characterized in that** the free jet 12 is directed within the cyclone separator 4 against the predominant circumferential flow direction of the solid flow quantity 11 that is fed into the recirculation line 5.

7. Method according to one of claims 1 to 6, **characterized in that** the free jet 12 exhibits an axial component in the direction of the longitudinal axis 15 of the cyclone separator 4, whereby the axial component of the free jet 12 exhibits a first angle β₁ of between 0° and 80° or a second angle β₂ of between 0° and 30° in comparison to the norm for the longitudinal axis of the cyclone 16, and whereby the axial component of β₁ points in the direction of the gas outflow opening 21 and that of the second angle β₂ points in the opposite direction.

8. Method according to claim 7, **characterized in that** the free jet 12 points in the direction of the gas outflow opening 21.

9. Method according to one of the aforementioned claims, **characterized in that** the axial component of the free jet 12 exhibits a first angle β₁ of 10° to 50° in comparison to the norm for the longitudinal axis of the cyclone 16.

10. Method according to one of claims 1 to 9, **characterized in that** where two or several nozzles 13 are present in one or several cyclone separators 4, control of the divergent partial quantity 11a of the solid flow quantity 11 that is fed into the recirculation line 5 is implemented by switching on or off one or several nozzles 13.

11. Method according to one of claims 1 to 10, **characterized in that** the quantity of the divergent partial quantity 11a of the solid flow quantity 11 that is fed into the recirculation line 5 is implemented by means of nozzle diameters of varying size and the resultant variation in size of the jet medium throughput quantities.

12. Method according to one of claims 1 to 11, **characterized in that** the diversion of a partial quantity 11a of the solid flow quantity 11 that is fed into the recirculation line 5 is implemented by means of a transient jet blast.

13. Method according to one of claims 1 to 12, **characterized in that** the diversion of a partial quantity 11a of the solid flow quantity 11 that is fed into the recirculation line 5 is implemented by operating the nozzle 13 and its gaseous medium supply system 14 either manually or automatically.

14. Method according to claim 13, **characterized in that** when the nozzle 13 is automatically operated, control is dependent on the operational parameters of the fluidized bed reactor 2 and/or the operational parameters of the extraction devices for the solids 23 in the fluidized bed reactor system 1.

15. Method according to one of claims 1 to 14, **characterized in that** the diverted partial quantity 11 a comprises 0.01 % to 10% of the solid flow quantity 11 that is fed into the recirculation line 5.

16. Method according to one of claims 1 to 15, **characterized in that** the fluidized bed reactor 2 is implemented as a combustion chamber and used for burning combustible material such as fossil and/or biogenic fuel and/or waste or fuels derived from waste.

## Revendications

1. Procédé de régulation du débit solide en circulation d'un système de réacteur à lit fluidisé,
dans lequel un flux solide/gazeux (9) provenant du réacteur à lit fluidisé (2) du système de réacteur à lit fluidisé (1) est envoyé tangentiellement dans au moins un séparateur à cyclone (4) pour une séparation approfondie des solides du flux gazeux et dans lequel les solides séparés dans le séparateur à cyclone sont renvoyés dans le réacteur à lit fluidisé (2) via une conduite de recirculation (5),
moyennant quoi le flux gazeux (10) évacué du système de réacteur à lit fluidisé (1) s'échappe par un orifice d'évacuation de gaz (21) agencé dans la paroi supérieure du séparateur à cyclone (4) et le flux solide (11) séparé est envoyé dans la conduite de recirculation (5),
**caractérisé en ce**
**qu'**au moins un jet gazeux libre (12) formé par un ajutage (13) dirige, depuis la paroi (20) du séparateur à cyclone (4) et au moyen de l'impulsion du jet, une quantité partielle (11a) du flux solide (11) envoyée dans la conduite de recirculation (5) dans l'orifice d'évacuation de gaz (21) et en ce que la quantité restante (11b) est envoyée dans la conduite de recirculation (5),
dans lequel le jet libre (12) sort de l'ajutage (3) depuis une zone de la paroi (20) du séparateur à cyclone (4) selon un angle compris dans une plage d'angle (γ) de 30° et 180° par rapport au plan virtuel (E) passant par le centre du cyclone et perpendiculaire à la direction tangentielle d'entrée du flux solide/gazeux (9) dans le séparateur à cyclone (4) et dans lequel la plage d'angle s'étend en direction du flux solide/gazeux (9), vue dans le sens de l'écoulement en aval du plan virtuel (E).

2. Procédé selon la revendication 1, **caractérisé en ce que** le jet libre, (12) d'ajutage possède une vitesse au moins égale à celle du son à la sortie de l'ajutage (13).

3. Procédé selon la revendication 1 ou 2, **caractérisé en ce que** le fluide gazeux entrant sous forme d'un jet libre (12) émis par un ajutage (13) est constitué soit d'air, de vapeur, du gaz d'échappement du réacteur à lit fluidisé (2) ou encore d'une combinaison de ceux-ci.

4. Procédé selon la revendication 3, **caractérisé en ce que** la vapeur utilisée est une vapeur à basse pression ou une vapeur provenant d'un système d'alimentation pour soufflantes de suie.

5. Procédé selon l'une quelconque des revendications 1 à 4, **caractérisé en ce que** le jet libre (12) d'ajutage entre dans le séparateur à cyclone (4) sous un angle bilatéral (α₁, α₂) de 0° à 50° par rapport au rayon (R) dirigé vers le centre du cyclone, vu depuis l'ajutage (13), moyennant quoi les angles (α₁,α₂) s'étendent dans le plan transversal du séparateur à cyclone passant par l'ajutage (13).

6. Procédé selon la revendication 5, **caractérisé en ce que** le jet libre (12) d'ajutage est dirigé en direction opposée à la direction circonférentielle prédominante du flux solide (11) envoyé dans la conduite de recirculation (5) dans le séparateur à cyclone (4).

7. Procédé selon l'une quelconque des revendications 1 à 6, **caractérisé en ce que** le jet libre (12) d'ajutage comporte une composante axiale dirigée selon l'axe longitudinal (15) du séparateur à cyclone (4), moyennant quoi la composante axiale du jet libre (12) d'ajutage comporte un premier angle (β₁) de 0° à 80° ou un deuxième angle (β₂) de 0° à 30° par rapport à la normale à l'axe longitudinal du cyclone (16) et moyennant quoi la composante axiale du premier angle (β₁) est dirigée en direction de l'orifice de sortie de gaz (21) et celle du deuxième angle (β₂) est dirigée en direction opposée.

8. Procédé selon la revendication 7, **caractérisé en ce que** le jet libre (1,2) d'ajutage est dirigé en direction de l'orifice de sortie de gaz (21).

9. Procédé selon l'une quelconque des revendications précédentes, **caractérisé en ce que** la composante axiale du jet libre (12) d'ajutage présente un premier angle (β₁) de 10° à 50° par rapport à la normale à l'axe longitudinal du cyclone (16).

10. Procédé selon l'une quelconque des revendications 1 à 9, **caractérisé en ce qu'**en présence de deux ou de plusieurs ajutages (13) dans un ou plusieurs séparateurs à cyclone (4), la régulation de la quantité partielle (11a) divergée du flux solide (11) envoyée dans la conduite de recirculation (5) est effectuée par l'ouverture ou la fermeture d'un ou de plusieurs ajutages (13).

11. Procédé selon l'une quelconque des revendications 1 à 10, **caractérisé en ce que** la valeur de la quantité partielle (11 a) divergée du flux solide (11) envoyée dans la conduite de recirculation(5) est déterminée selon différents diamètres d'ajutage et leur débit de fluide de jet correspondant.

12. Procédé selon l'une quelconque des revendications 1 à 11, **caractérisé en ce que** la dérivation d'une quantité partielle (11a) du flux solide (11) envoyée dans la conduite de recirculation (5) est réalisée au moyen d'une impulsion de jet temporaire.

13. Procédé selon l'une quelconque des revendications 1 à 12, **caractérisé en ce que** la dérivation d'une quantité partielle (11a) du flux solide (11) envoyée dans la conduite de recirculation (5) est réalisée par commande manuelle ou automatique de l'ajutage (13) et de son système d'alimentation (14) en fluide gazeux.

14. Procédé selon la revendication 13, **caractérisé en ce qu'**en cas de commande automatique de l'ajutage (13), la régulation est effectuée en fonction de paramètres de fonctionnement du réacteur à lit fluidisé (2) et/ou de paramètres de fonctionnement des dispositifs de soustraction (23) des solides du système de réacteur à lit fluidisé (1).

15. Procédé selon l'une quelconque des revendications 1 à 14, **caractérisé en ce que** la quantité partielle (11a) divergée comporte de 0,01 % à 10% du flux solide (11) envoyé dans la conduite de recirculation (5).

16. Procédé selon l'une quelconque des revendications 1 à 15, **caractérisé en ce que** le réacteur à lit fluidisé (2) est agencé comme une chambre de combustion et est employé pour brûler des matériaux combustibles tels que des carburants fossiles et/ou biogéniques et/ou des déchets ou des carburants issus de déchets.
